# EUROPÄISCHE PATENTSCHRIFT

(11) **EP 0 763 640 B1**
(45) Veröffentlichungstag und Bekanntmachung des Hinweises auf die Patenterteilung: **18.10.2000**
(21) Anmeldenummer: 96112383.3
(22) Anmeldetag: 31.07.1996
(51) Int. Cl.: E05B 67/38, B62H 5/00

(54) **Schliessvorrichtung**
Locking device
Dispositif de fermeture

(30) Priorität: 06.09.1995 DE 19532933
(43) Veröffentlichungstag der Anmeldung: 19.03.1997
(73) Patentinhaber: ABUS AUG. BREMICKER SÖHNE KG, 58300 Wetter (DE)
(72) Erfinder: Bremicker, Michael, Dr., 56479 Rehe (DE)
(74) Vertreter: Manitz, Finsterwald & Partner

(56) Entgegenhaltungen:
- EP-A- 0 361 155
- EP-A- 0 579 842
- EP-A- 0 641 908
- DE-U- 8 903 908
- DE-U- 9 320 765

## Beschreibung

Die vorliegende Erfindung betrifft eine Schließvorrichtung mit einem einen Schloßkörper aufweisenden Schloß, insbesondere einem Ring- oder Bügelschloß, und einer Halterung zu dessen Befestigung an einem Fahrzeug, insbesondere am Rahmen, Gepäckträger oder Sattel eines Fahrrades, gemäß dem Oberbegriff des Anspruchs 1. Ein solche Vorrichtung ist aus EP 0 361 155 A bekannt.

Schließvorrichtungen dieser Art werden bevorzugt für die Diebstahlsicherung von Fahrrädern verwendet. Während bei Ringschlössern ein Riegelelement über ein flexibles Kabel oder eine Kette mit dem Schloßkörper verbunden ist (Kabel- oder Kettenschlösser), wird bei einem Bügelschloß die Verbindung zwischen dem Riegelelement und dem Schloßkörper üblicherweise durch einen starren Metallbügel gebildet.

Um für das Schloß im nicht gesicherten Zustand des Fahrrades, beispielsweise während des Fahrens, eine definierte Aufbewahrung zu schaffen, ist es bekannt, eine Halterung am Rahmen, Gepäckträger oder Sattel des Fahrrades vorzusehen, an der das Schloß befestigt werden kann.

Es sind mit einer Ringöse versehene Befestigungsaufnahmen bekannt, die an einen Endteil eines Schloßkörpers eines Bügelschlosses und eines dazugehörigen Endteils des Bügels angepaßt sind, so daß die Endteile durch die Ringöse hindurch verbunden und dadurch an der Befestigungsaufnahme fixiert werden können.

Aus der DE 33 35 662 ist ein derartige Halterung bekannt. Halterungen der genannten Art können sowohl für Ringschlösser als auch für Bügelschlösser verwendet werden.

Eine weitere Schließvorrichtung ist aus der EP 0 361 155 A bekannt. Bei dieser Vorrichtung ist eine Halterung für ein Schloß vorgesehen, die einen Aufnahmeabschnitt zur Aufnahme des Schlosses und einen Befestigungsabschnitt zur Befestigung an einem Zweirad umfaßt. Der Aufnahmeabschnitt ist in Längsrichtung mit Führungsmitteln versehen, die mit an dem Schloß ausgebildeten Führungsmitteln eine Linearführung ergeben. In der Grundfläche der Halterung befindet sich eine Durchgangsbohrung, durch die zur Festlegung des Schlosses an der Halterung ein Riegelstück des Schlosses hindurchgeführt und im Schloß verriegelt werden kann.

Der vorliegenden Erfindung liegt die Aufgabe zugrunde, eine Schließvorrichtung der eingangs genannten Art zu schaffen, bei der zum einen die Befestigung des Schlosses an der Halterung einfach durchführbar und zum anderen eine kompakte und optisch ansprechende Ausbildung von Halterung und Schloßkörper erreichbar ist. Zudem soll die Form von Schloß und Halterung beim Festlegen des Schlosses an der Halterung eine sinnfällige Bedienung ermöglichen und den Benutzer somit hinsichtlich einer korrekten Relativbewegung zwischen Schloß und Halterung führen.

Diese Aufgabe wird ausgehend von einer Schließvorrichtung der eingangs genannten Art dadurch gelöst, daß zwischen dem in der Ausnehmung aufgenommenen Halterungsabschnitt und der Schloßkörperoberfläche ein im wesentlichen kontinuierlicher Übergang vorhanden ist, wobei die die Ausnehmung aufweisende Seite des Schloßkörpers zusammen mit dem in der Ausnehmung aufgenommenen Halterungsabschnitt eine im wesentliche plane Oberfläche bildet.

Durch die erfindungsgemäße Ausbildung wird erreicht, daß die Kombination aus zusammengesetzter Halterung und Schloßkörper einen kompakten Aufbau aufweist. Darüber hinaus wird durch das Vorsehen einer im wesentlichen komplementär zu dem Halterungsabschnitt ausgebildeten Ausnehmung eine sinnfällige Bedienung erreicht, d.h. der Benutzer erkennt unmittelbar wie das Schloßgehäuse in die Halterung einzuführen ist. Dadurch sind Fehlbedienungen beim Befestigen des Schlosses an der Halterung weitgehend ausgeschlossen.

Da auf diese Weise die Kombination aus Schloßkörper und Halterung eine im wesentlichen gleichmäßig verlaufende Oberfläche aufweist, ist zum einen die Verschmutzungstendenz und zum anderen die Verletzungsgefahr reduziert, da praktisch keinerlei Ecken oder Kanten an der aus Halterung und Schloßkörper bestehenden Kombination vorhanden sind, in denen sich Schmutz absetzen kann bzw. die zu Verletzungen führen können.

Nach einer weiteren bevorzugten Ausführungsform der Erfindung umfaßt die Halterung einen im wesentlichen U-förmigen Bügel, dessen Schenkel zwei Halterungsabschnitte bilden. Insbesondere sind dabei an zwei gegenüberliegenden Seiten des Schloßkörpers Ausnehmungen ausgebildet, in die die beiden Schenkel des U-förmigen Bügels einsetzbar sind.

Auf diese Weise wird erreicht, daß nach Einführen des Schloßkörpers zwischen die Schenkel des U-förmigen Bügels sämtliche Freiheitsgrade des Schloßkörpers bis auf einen gesperrt sind. Dieser letzte Freiheitsgrad kann beispielsweise dadurch gesperrt werden, daß das Riegelelement durch eine in einem der Schenkel vorgesehene Öffnung in die am Schloßkörper vorgesehene Riegelöffnung gesteckt und darin verriegelt wird. Es kann aber beispielsweise auch eine lösbare Verrastung zwischen einem oder beiden Schenkeln des U-förmigen Bügels und dem Schloßgehäuse vorgesehen sein.

Durch die Verwendung des U-förmigen Bügels in Verbindung mit den vorstehenden Merkmalen wird eine besonders sichere Kopplung von Halterung und Schloßkörper erreicht.

Weitere vorteilhafte Ausführungsformen sind in den Unteransprüchen angegeben.

Die Erfindung wird nachfolgend anhand eines Ausführungsbeispiels unter Bezugnahme auf die Zeichnungen näher beschrieben; in diesen zeigen:
- Fig. 1: eine erfindungsgemäß ausgebildete Schließvorrichtung, bei der Halterung, Schloßkörper und Riegelelement getrennt voneinander dargestellt sind,
- Fig. 2: die erfindungsgemäß ausgebildete Schließvorrichtung nach Fig. 1, bei der der Schloßkörper in die Halterung eingeführt ist,
- Fig. 3: die erfindungsgemäß ausgebildete Schließvorrichtung nach Fig. 2 aus einer anderen Perspektive,
- Fig. 4: die erfindungsgemäß ausgebildete Schließvorrichtung nach Fig. 1, bei der Halterung, Schloßkörper und Riegelelement zu einer Einheit zusammengefügt sind und
- Fig. 5: eine erfindungsgemäß ausgebildete Halterung.

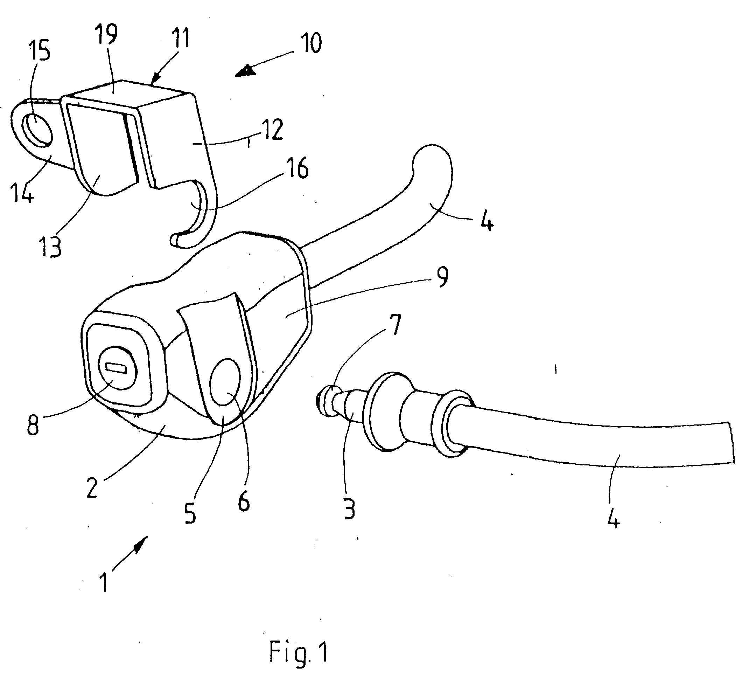

Fig. 1 zeigt ein Schloß 1, das einen Schloßkörper 2 und ein Riegelelement 3 umfaßt, die über ein nur teilweise dargestelltes Kabel 4 miteinander verbunden sind.

An einer Seite 9 des Schloßkörpers 2 ist eine Ausnehmung 5 vorgesehen, in der eine Riegelöffnung 6 zur verriegelbaren Aufnahme des Riegelelements 3 angeordnet ist. Dazu ist an dem freien Ende des Riegelelementes 3 ein Fortsatz 7 vorgesehen, der mit einem nicht dargestellten Eingriffselement im Inneren der Riegelöffnung 6 zusammenwirkt, so daß bei vollständig in die Riegelöffnung 6 eingeführtem Riegelelement 3 das Eingriffselement in eine am Fortsatz 7 ausgebildete Hinterschneidung eingreift. Grundsätzlich kann jedoch auch das Riegelelement 3 am Schloßkörper 1 und die Riegelöffnung 6 in einem am Ende des Kabels 4 befestigten Element vorgesehen sein.

Das Eingriffselement ist mittels eines Schlüssels durch einen im Schloßkörper 2 vorgesehenen Zylinder 8 betätigbar, wodurch der Fortsatz 7 des Riegelelements 3 freigebbar und das Riegelelement 3 aus der Riegelöffnung 6 entnehmbar ist.

Die in Fig. 1 dargestellte Schließvorrichtung umfaßt weiterhin eine Halterung 10, welche aus einem U-förmigen Bügel 11 mit zwei Schenkeln 12, 13, einer die Schenkel 12, 13 verbindenden Basis 19 sowie einem mit dem U-förmigen Bügel 11 einstückig als Lasche ausgebildeten Befestigungselement 14 besteht. Das Befestigungselement 14 weist eine Öffnung 15 auf und kann beispielsweise über eine Schraube mit dem Sattel, dem Gepäckträger oder dem Rahmen eines Fahrrades verschraubt werden. Es ist jedoch auch möglich, daß das Befestigungselement 14 als Befestigungsschelle ausgebildet ist oder an dem Befestigungselement 14 eine Befestigungsschelle angebracht wird, mit der die Halterung 10 am Rahmen, Gepäckträger oder Sattel eines Fahrrades befestigbar ist.

Der Schenkel 12 bildet einen ersten Halterungsabschnitt der Halterung 10 und ist an seinem freien Ende hakenförmig geformt, wodurch eine seitlich zugängliche Öffnung 16 gebildet wird. Der Schenkel 12 besitzt eine größere Länge als der Schenkel 13, wobei die Länge des Schenkels 12 im wesentlichen gleich der Länge der Ausnehmung 5 ist.

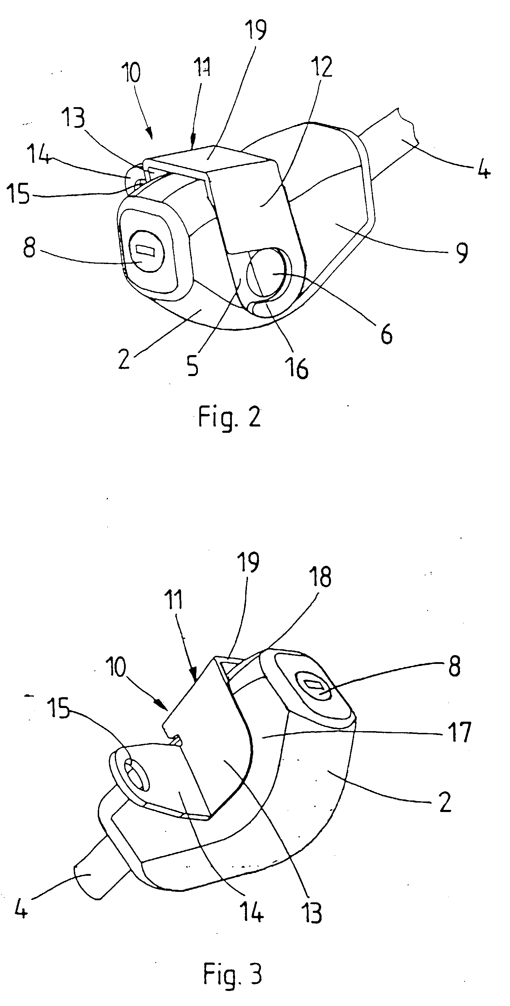

Fig. 2 zeigt den Schloßkörper 2 und die Halterung 11, wobei der als Schenkel 12 ausgebildete Halterungsabschnitt der Halterung 10 in die Ausnehmung 5 im Schloßkörper 2 eingesetzt ist. Dabei ist zu erkennen, daß die Öffnung 16 mit der Riegelöffnung 6 ausgerichtet ist, so daß das Riegelelement 3 (Fig. 1) auch bei in die Ausnehmung 5 eingesetztem Schenkel 12 in die Riegelöffnung 6 einführbar ist.

Aus Fig. 2 ist weiterhin zu erkennen, daß durch die komplementäre Ausbildung der Ausnehmung 5 und des Schenkels 12 ein im wesentlichen kontinuierlicher Übergang zwischen der Oberfläche der Seite 9 des Schloßkörpers 2 und dem Schenkel 12 erreicht wird, so daß bei in den U-förmigen Bügel 11 eingeführtem Schloßkörper 2 zum einen eine kompakte, in sich geschlossene Ausbildung der Kombination von Schloßkörper 2 und U-förmigem Bügel 11 und zum anderen eine sichere Fixierung des Schloßkörpers 2 in der Halterung 10 gewährleistet ist.

Aus Fig. 3 ist zu erkennen, daß auf der der Seite 9 des Schloßkörpers 2 gegenüberliegenden Seite 17 des Schloßkörpers 2 eine weitere Ausnehmung 18 vorgesehen ist, in die der zweite Schenkel 13 des U-förmigen Bügels 11 einsetzbar ist. Auch hier sind die Ausnehmung 18 und der Schenkel 13 im wesentlichen komplementär zueinander ausgebildet, so daß ein kontinuierlicher Übergang zwischen der Oberfläche der Seite 17 des Schloßkörpers 2 und der Außenseite des Schenkels 13 vorhanden ist. Die Länge der Ausnehmung 18 ist dabei im wesentlichen gleich der Länge des Schenkels 13. Gegenüber einer Ausführungsform mit nur einem in einer Ausnehmung aufgenommenen Halterungsabschnitt 12 wird eine noch stabilere Verbindung zwischen dem Schloßgehäuse 2 und der Halterung 10 erreicht.

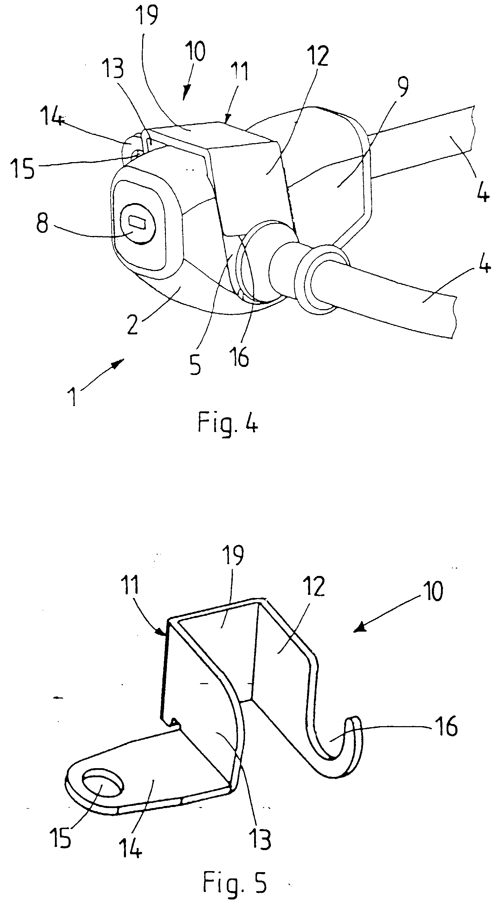

Fig. 4 zeigt die erfindungsgemäß ausgebildete Schließvorrichtung, wobei im Vergleich zu Fig. 2 zusätzlich das in die Riegelöffnung 6 eingeführte Riegelelement 3 dargestellt ist. Aus dieser Darstellung ist zu erkennen, daß bei in die Riegelöffnung 6 eingesetztem Riegelelement 3 eine Trennung von Schloßkörper 2 und Halterung 10 nicht möglich ist. Das Schloß ist somit gegen unbeabsichtigtes Herausfallen sowie gegen unerlaubtes Entnehmen durch Dritte gesichert.

Aus Fig. 5, in der die erfindungsgemäß ausgebildete Halterung 10 für sich allein dargestellt ist, ist besonders gut die einstückige Ausbildung der Halterung 10 bestehend aus den Schenkeln 12, 13, der Basis 19 und dem als Lasche ausgebildeten Befestigungselement 14 zu erkennen. Die gesamte Halterung 10 ist aus einem Flacheisen durch Umbiegung der jeweiligen Abschnitte 12, 13 und 14 herstellbar. Auf diese Weise ist eine einfache und kostengünstige Herstellung einer erfindungsgemäß ausgebildeten Halterung 10 möglich.

Nachfolgend wird die Funktionsweise einer erfindungsgemäß ausgebildeten Schließvorrichtung näher beschrieben:

Die Halterung 11 wird beispielsweise über die Sattel- oder Gepäckträgerbefestigungsschraube eines Fahrrades oder eine Befestigungsschelle am Rahmen eines Fahrrades befestigt. Zum Befestigen des Schlosses 1 an der Halterung 10 wird das Schloß 1 so zwischen die Schenkel 12, 13 der Halterung 10 eingeschoben, daß zunächst die freien Enden der Schenkel 12, 13 in die Ausnehmungen 5, 18 des Schloßgehäuses 2 eingesetzt werden. Anschließend wird das Schloßgehäuse 2 durch Verschieben in Richtung der Basis 19 des U-förmigen Bügels 11 vollständig in die Halterung 10 eingeschoben, bis die freien Enden der Schenkel 12, 13 an den Anschläge bildenden Enden der Ausnehmungen 5, 18 zur Anlage kommen. Bei vollständig eingeführtem Schloßkörper 2 befindet sich die Öffnung 16 in Deckung mit der Riegelöffnung 6, so daß das Riegelelement 3 in die Riegelöffnung 6 eingeführt werden kann.

Da durch die komplementäre Ausbildung der Ausnehmungen 5, 18 und der Schenkel 12, 13 eine Drehbewegung des Schloßkörpers 2 gegenüber der Halterung 10 verhindert wird und der letzte verbleibende Freiheitsgrad des Schloßkörpers 2 durch das Einsetzen des Riegelelementes 3 gesperrt wird, ist somit eine sichere und stabile Fixierung des Schloßkörpers 2 in der Halterung 10 gewährleistet.

Dabei ist durch die im Schloßkörper 2 vorhandenen Ausnehmungen 5 und 18 sowie die dazu passenden Schenkel 12 und 13 gewährleistet, daß vom Benutzer unmittelbar erkannt wird, auf welche Weise der Schloßkörper 2 in die Halterung 10 eingesetzt werden muß, so daß eine Fehlbedienung weitgehend ausgeschlossen ist.

Um ein eventuell noch mögliches versehentliches Einsetzen des Schloßkörpers 2 um 180° verdreht gegenüber der korrekten Einsetzposition zu verhindern, weisen die Schenkel 12, 13 und entsprechend die Ausnehmungen 5, 18 jeweils paarweise unterschiedliche Längen auf. Dadurch ist gewährleistet, daß bei dem Versuch, den Schloßkörper 2 um 180° verdreht in die Halterung 10 einzusetzen, das Ende des längeren Schenkels 12 am Ende der kürzeren Ausnehmung 18 zur Anlage kommt, so daß ein vollständiges Einschieben des Schloßkörpers 2 in die Halterung 10 nicht möglich ist.

Ebenso könnte man beispielsweise die beiden Schenkel und Ausnehmungen jeweils mit paarweise voneinander verschiedenen Breiten ausbilden, so daß ein Einsetzen des Schloßkörpers um 180° verdreht gegenüber der korrekten Einsatzposition von vornherein ausgeschlossen ist.

Die sinnfällige Bedienung kann allgemein dadurch verbessert werden, daß die geometrischen Formen der beiden Schenkel und Ausnehmungen paarweise unterschiedlich ausgebildet sind, so daß die Zuordnung des jeweiligen Schenkels zu der entsprechenden Ausnehmung noch schneller erkennbar ist. Dazu kann beispielsweise eine Ausnehmung und der zugeordnete Schenkel eine im wesentlichen rechteckige Form und die andere Ausnehmung sowie der zugeordnete Schenkel eine zu seinem freien Ende hin sich verjüngende Form aufweisen. Diese Form kann beispielsweise im wesentlichen trapezförmig oder kreissegmentförmig sein und entweder nur im Endbereich vorgesehen sein oder sich über die gesamte Länge des jeweiligen Schenkels erstrecken.

Bevorzugt sind dabei die Einführungsöffnungen der Ausnehmungen so unterschiedlich breit ausgebildet, daß sich der der breiteren Ausnehmung zugeordnete Schenkel von vornherein nicht in die schmälere Ausnehmung einführen läßt. Beispielsweise kann die Breite eines rechteckförmig ausgebildeten Schenkels und seiner zugeordneten Ausnehmung größer gewählt sein als die Basisbreite der auf der anderen Seite des Schloßkörpers vorgesehenen trapezförmigen Ausnehmung, so daß ein Einführen des rechteckförmigen Schenkels in die trapezförmige Ausnehmung bereits im Ansatz verhindert wird.

Neben der Kennzeichnung durch unterschiedliche Formen kann die sinnfällige Bedienung auch durch eine zusätzliche oder für sich allein gewählte Farbkennzeichnung der Schenkel und Ausnehmungen oder der Seiten des Schloßkörpers mit der entsprechenden Ausnehmung erreicht werden. Durch die Verwendung gleicher Farben für den Schenkel und die jeweils zugeordnete Ausnehmung oder die Seite des Schloßkörpers mit der zugeordneten Ausnehmung ist eine unmittelbare optische Zuordnung von Schenkel und Ausnehmung möglich.

Um eine noch bessere Integration der Halterung 10 in den Schloßkörper 2 und damit verbunden einen noch kompakteren Aufbau sowie eine gleichmäßigere Oberfläche der Kombination aus Schloßkörper 2 und Halterung 10 zu erreichen, kann auch an der Oberseite des Schloßkörpers 2, die der Basis 19 des U-förmigen Bügels 11 zugeordnet ist, eine weitere Ausnehmung vorgesehen sein, in der die Basis 19 bei vollständigem Ineinandergreifen von Schloßkörper 2 und Halterung 10 zu liegen kommt.

## Patentansprüche

1. Schließvorrichtung mit einem einen Schloßkörper (2) aufweisenden Schloß (1), insbesondere einem Ring- oder Bügelschloß, und einer Halterung (10) zu dessen Befestigung an einem Fahrzeug, insbesondere am Rahmen, Gepäckträger oder Sattel eines Fahrrades, wobei bei an der Halterung (10) festgelegtem Schloß (1) zumindest ein an der Halterung (10) vorgesehener Abschnitt (12, 13) in einer zumindest an einer Seite (9) des Schloßkörpers (2) vorgesehenen und im wesentlichen komplementär zum Halterungsabschnitt (12, 13) ausgebildeten Ausnehmung (5, 18) aufgenommen ist,
dadurch **gekennzeichnet**,
daß zwischen dem in der Ausnehmung (5, 18) aufgenommenen Halterungsabschnitt (12, 13) und der Schloßkörperoberfläche ein im wesentlichen kontinuierlicher Übergang vorhanden ist, wobei die die Ausnehmung (5, 18) aufweisende Seite (9, 17) des Schloßkörpers (2) zusammen mit dem in der Ausnehmung aufgenommenen Halterungsabschnitt (12, 13) eine im wesentliche plane Oberfläche bildet.

2. Schließvorrichtung nach Anspruch 1,
dadurch **gekennzeichnet**,
daß das Schloß (1) ein Riegelelement (3) und eine insbesondere am Schloßkörper (2) vorgesehene Riegelöffnung (6) zur verriegelbaren Aufnahme des Riegelelements (3) umfaßt und daß der Halterungsabschnitt (12) eine Öffnung (16) aufweist, durch die das Riegelelement (3) bei in der Ausnehmung (5) aufgenommenem Halterungsabschnitt (12) in die Riegelöffnung (6) einsteckbar ist, und/oder daß durch das eingesteckte Riegelelement (3) ein Abnehmen der Halterung (10) verhindert wird.

3. Schließvorrichtung nach einem der vorhergehenden Ansprüche,
dadurch **gekennzeichnet**,
daß die Öffnung (16) durch eine hakenförmige Ausbildung des Halterungsabschnittes (12) gebildet wird, und/oder daß die Halterung (10) einen im wesentlichen U-förmigen Bügel (11) umfaßt, dessen Schenkel zwei Halterungsabschnitte (12, 13) bilden, wobei insbesondere an zwei gegenüberliegenden Seiten (9, 17) des Schloßkörpers (2) Ausnehmungen (5, 18) ausgebildet sind, in die die beiden Schenkel (12, 13) des U-förmigen Bügels (11) einsetzbar sind.

4. Schließvorrichtung nach Anspruch 3,
dadurch **gekennzeichnet**,
daß die Öffnung (16) in einem der Schenkel (12) des U-förmigen Bügels (11) ausgebildet ist, und/oder daß an einem der Schenkel (13) ein Befestigungselement (14) zur Befestigung der Halterung (10) am Fahrzeug vorgesehen ist, wobei insbesondere das Befestigungselement (14) einstückig mit dem U-förmigen Bügel (11), insbesondere als umgebogene Lasche ausgebildet ist.

5. Schließvorrichtung nach einem der Ansprüche 3 oder 4,
dadurch **gekennzeichnet**,
daß der U-förmige Bügel (11) den Schloßkörper (2) im eingesetzten Zustand an drei Seiten umfaßt, und/oder daß die beiden Ausnehmungen (5, 18) im wesentlichen parallel zueinander verlaufen und die beiden Schenkel (12, 13) des U-förmigen Bügels (11) in die Ausnehmungen (5, 18) linear einschiebbar sind.

6. Schließvorrichtung nach einem der vorhergehenden Ansprüche,
dadurch **gekennzeichnet**,
daß jeweils der Halterungsabschnitt (12, 13) und die zugeordnete Ausnehmung (5, 18) im wesentlichen die gleiche Länge besitzen, wobei insbesondere die Halterungsabschnitte (12, 13) unterschiedliche Längen besitzen, und/oder daß jeweils die einander zugeordneten Halterungsabschnitte (12, 13) und Ausnehmungen (5, 18) im wesentlichen die gleichen Breiten und die Halterungsabschnitte (12, 13) untereinander unterschiedliche Breiten besitzen.

7. Schließvorrichtung nach einem der vorhergehenden Ansprüche,
dadurch **gekennzeichnet**,
daß die geometrischen Formen, insbesondere die bei in den Ausnehmungen (5, 18) aufgenommenen Halterungsabschnitten (12, 13) sichtbaren Umrisse der Halterungsabschnitte (12, 13) unterschiedlich ausgebildet sind, wobei sich insbesondere die Breite zumindest eines Halterungsabschnittes (12, 13) entlang seiner Längsachse ändert, insbesondere verringert, und/oder zumindest einer der Halterungsabschnitte (12, 13) zumindest in seinem Endbereich trapezförmig oder im wesentlichen kreissegmentförmig ausgebildet ist.

8. Schließvorrichtung nach einem der Ansprüche 3 bis 7,
dadurch **gekennzeichnet**,
daß die die beiden Schenkel (12, 13) verbindende Basis (19) des U-förmigen Bügels (11) im eingesetzten Zustand an dem Schloßgehäuse (2) anliegt, und/oder daß die die beiden Schenkel (12, 13) verbindende Basis (19) des U-förmigen Bügels (11) im eingesetzten Zustand in einer weiteren im Schloßgehäuse (2) vorgesehenen Ausnehmung aufgenommen ist.

9. Schließvorrichtung nach einem der vorhergehenden Ansprüche,
dadurch **gekennzeichnet**,
daß der Schloßkörper (2) an der Halterung (10) mittels eines Rastelements fixierbar ist, und/oder daß die Halterung (10) aus einem im Querschnitt flachstabförmigen Profil gebildet ist.

## Claims

1. Lock apparatus comprising a lock (1) having a lock body (2), in particular a ring lock or hoop lock and a holder (10) for its attachment to a vehicle, in particular to the frame, luggage carrier or saddle of a cycle, wherein, when the lock (1) is fixed to the holder (10), at least one section (12, 13) provided at the holder is received in a recess (5, 18) provided at at least one side (9) of the lock body (2) and formed substantially complementary to the holding section (12, 13), characterized in that a substantially continuous transition is present between the holder section (12, 13) received in the recess (5, 18) and the lock surface, with the side (9, 17) of the lock body (2) having the recess (5, 18) together with the holder section (12, 13) received in that recess forming a substantially flat surface.

2. Lock apparatus in accordance with claim 1, characterized in that the lock (1) includes a latch element (3) and a latch opening (6), which is in particular provided at the lock body (2) for the latchable reception of the latch element (3), and in that the holding section (12) has an opening (16) through which the latch element (3) can be inserted into the latch opening (6) when the holding section (12) is received in the recess (5) and/or in that a removal of the holder (10) is prevented by the inserted latch element (3).

3. Lock apparatus in accordance with one of the preceding claims, characterized in that the opening (16) is formed by a hook-like formation of the holding section (12) and/or in that the holder (10) includes a substantially U-shaped hoop (11), the limbs of which form two holder sections (12, 13), with recesses (5, 18) being formed, in particular at two opposite sides (9, 17) of the lock body (2), into which the two limbs (12, 13) of the U-shaped hoop (11) can be inserted.

4. Lock apparatus in accordance with claim 3, characterized in that the opening (16) is formed in one of the limbs (12) of the U-shaped hoop (11) and/or in that a fastener element (14) is provided at one of the limbs (13) for the fastening of the holder (10) to the vehicle, wherein a fastener element (14) is in particular formed in one piece with the U-shaped hoop (11), in particular as a bent over lug.

5. Lock apparatus in accordance with one of the claims 3 or 4, characterized in that the U-shaped hoop (11) surrounds the lock body (2) on three sides in the inserted state and/or in that the two recesses (5, 18) extend substantially parallel to one another and the two limbs (12, 13) of the U-shaped hoop (11) are linearly insertable into the recesses (5, 18).

6. Lock apparatus in accordance with one of the preceding claims, characterized in that each holding section (12, 13) and the associated recess (5, 18) have substantially the same length, with the holding sections (12, 13) in particular having different lengths and/or in that the mutually associated holding sections (12, 13) and recesses (5, 18) each have substantially the same widths and the holding sections (12, 13) have different widths relative to one another.

7. Lock apparatus in accordance with one of the preceding claims, characterized in that the geometrical shapes, in particular the outlines of the holder sections (12, 13) visible with the holder sections (12, 13) received in the recesses (5, 18) are differently shaped, wherein the width of at least one holder section (12, 13) in particular changes along its longitudinal axis, in particular reduces and/or at least one of the holder sections (12, 13) is of trapezoidal shape or substantially of circular segment shape, at least in its end region.

8. Lock apparatus in accordance with one of the claims 3 to 7, characterized in that the base (19) of the U-shaped hoop (11) connecting the two limbs (12, 13) contacts the lock housing (2) in the inserted state and/or in that the base (19) of the U-shaped hoop (11) connecting the two limbs (12, 13) is received in the inserted state in a further recess provided in the lock housing (2).

9. Lock apparatus in accordance with one of the preceding claims, characterized in that the lock body (2) can be fixed to the holder (10) by means of a latch element, and/or in that the holder (10) is formed from a section of flat bar-like shape in cross-section.

## Revendications

1. Dispositif de fermeture comprenant un cadenas (1) présentant un corps de cadenas (2), en particulier un cadenas à anneau ou un cadenas à arceau, et une monture (10) pour sa fixation sur un véhicule, en particulier sur le cadre, sur le porte-bagages, ou sur la selle d'une bicyclette, de sorte que lorsque le cadenas (1) est fixé sur la monture (10), au moins un tronçon (12, 13) prévu sur la monture (10) est reçu dans un logement (5, 18) prévu au moins sur un côté (9) du corps de cadenas (2) et réalisé essentiellement de manière complémentaire au tronçon de monture (12, 13),
caractérisé en ce qu'il est prévu entre le tronçon de monture (12, 13) reçu dans le logement (5, 18) et la surface du corps de -cadenas une transition sensiblement continue, et en ce que le côté (9, 17) du corps de cadenas (2) qui présente le logement (5, 18) forme conjointement avec le tronçon de monture (12, 13) reçu dans le logement une surface sensiblement plane.

2. Dispositif de fermeture selon la revendication 1, caractérisé en ce que le cadenas (1) comprend un élément de verrou (3) et une ouverture à verrou (6), prévue en particulier sur le corps de cadenas (2), afin de recevoir de manière verrouillée l'élément de verrou (3), et en ce que le tronçon de monture (12) présente une ouverture (16) à travers laquelle l'élément de verrou (3) est susceptible d'être enfiché dans l'ouverture à verrou (6) lorsque le tronçon de monture (12) est reçu dans le logement (5), et/ou en ce qu'un enlèvement de la monture (10) est empêché par l'élément de verrou (3) enfiché.

3. Dispositif de fermeture selon l'une des revendications précédentes, caractérisé en ce que l'ouverture (16) est constituée par une conformation en forme de crochet du tronçon de monture (12), et/ou en ce que la monture (10) comprend un étrier (11) sensiblement en forme de U, dont les bras forment deux tronçons de monture (12, 13), et en ce que des logements (5, 18) sont réalisés en particulier sur deux côtés opposés (9, 17) du corps de cadenas (2), logements dans lesquels les deux bras (12, 13) de l'étrier en forme de U (11) sont susceptibles d'être mis en place.

4. Dispositif de fermeture selon la revendication 3, caractérisé en ce que l'ouverture (16) est ménagée dans l'un des bras (12) de l'étrier en forme de U (11), et/ou en ce qu'il est prévu sur l'un des bras (13) un élément de fixation (14) pour la fixation de la monture (10) sur le véhicule, et en ce que l'élément de fixation (14) est en particulier réalisé d'une seule pièce avec l'étrier en forme de U (11), en particulier sous forme d'une patte repliée.

5. Dispositif de fermeture selon l'une ou l'autre des revendications 3 et 4, caractérisé en ce que l'étrier en forme de U (3) entoure le corps de cadenas (2) sur trois côtés dans la situation mise en place, et/ou en ce que les deux logements (5, 18) s'étendent sensiblement parallèlement l'un à l'autre, et les deux bras (12, 13) de l'étrier en forme de U (11) sont susceptibles d'être enfilés de manière linéaire dans les logements (5, 18).

6. Dispositif de fermeture selon l'une des revendications précédentes, caractérisé en ce que le tronçon de monture respectif (12, 13) et le logement associé (5, 18) possèdent essentiellement la même longueur, en ce que les tronçons de monture (12, 13) possèdent en particulier des longueurs différentes, et/ou en ce que les tronçons de monture (12, 13) et les logements (5, 18) associés l'un à l'autre possèdent essentiellement la même largeur, et les tronçons de monture (12, 13) possèdent entre eux des largeurs différentes.

7. Dispositif de fermeture selon l'une des revendications précédentes, caractérisé en ce que les formes géométriques, en particulier les contours des tronçons de monture (12, 13) visibles lorsque ceux-ci sont reçus dans les logements (5, 18), sont réalisés de manière différente, et la largeur de l'un au moins des tronçons de monture (12, 13) varie en particulier le long de son axe longitudinal, en particulier diminue, et/ou en ce que l'un au moins des tronçons de monture (12, 13) est réalisé sous forme trapézoïdale, ou sensiblement sous forme de segment de cercle, au moins dans sa région terminale.

8. Dispositif de fermeture selon l'une des revendications 3 à 7, caractérisé en ce que la base (19) de l'étrier en forme de U (11) qui relie les deux bras (12, 13) est appliquée contre le boîtier de cadenas (2) dans la situation mise en place, et/ou en ce que la base (19) de l'étrier en forme de U (11) qui relie les deux bras (12, 13) est reçue dans un autre logement prévu dans le boîtier de cadenas (2).

9. Dispositif de fermeture selon l'une des revendications précédentes, caractérisé en ce que le corps de cadenas (2) est susceptible d'être fixé sur la monture (10) au moyen d'un élément à enclenchement, et/ou en ce que la monture (10) est réalisée à partir d'un profilé présentant en section transversale la forme d'un barreau plat.
